**Europäisches Patentamt**

**European Patent Office**

**Office européen des brevets**

(19)

(11) Veröffentlichungsnummer : **0 414 937 B1**

(12)

# EUROPÄISCHE PATENTSCHRIFT

(45) Veröffentlichungstag der Patentschrift :
**21.10.92 Patentblatt 92/43**

(51) Int. Cl.$^5$ : **C01F 11/46, C04B 11/024**

(21) Anmeldenummer : **89115971.7**

(22) Anmeldetag : **30.08.89**

(54) **Verfahren zur Herstellung von abbindefähigen Calciumsulfaten aus Calciumsulfat-Dihydrat.**

(43) Veröffentlichungstag der Anmeldung :
**06.03.91 Patentblatt 91/10**

(45) Bekanntmachung des Hinweises auf die
Patenterteilung :
**21.10.92 Patentblatt 92/43**

(84) Benannte Vertragsstaaten :
**AT BE CH DE ES FR GB GR IT LI LU NL SE**

(56) Entgegenhaltungen :
**EP-A- 0 237 802**
**EP-A- 0 244 726**
**GB-A- 1 079 502**
**US-A- 2 907 668**

(73) Patentinhaber : **Rigips GmbH**
**Rühler Strasse**
**W-3452 Bodenwerder (DE)**

(72) Erfinder : **Rennen, Heinz, Dr.**
**Im Junkergrund 25**
**W-3452 Bodenwerder (DE)**
Erfinder : **Spickermann, Winfried, Dr.**
**Elsa-Brandström-Strasse 4**
**W-3452 Bodenwerder (DE)**

(74) Vertreter : **Rücker, Wolfgang, Dipl.-Chem.**
**Patentanwalt**
**Bergiusstrasse 2b**
**W-3000 Hannover 51 (DE)**

EP 0 414 937 B1

Jouve, 18, rue Saint-Denis, 75001 PARIS

**Beschreibung**

Die Herstellung von Calciumsulfat-Halbhydrat als Baustoff ist ein an sich bekanntes Verfahren. Dabei unterscheidet man das durch ein trockenes Brennverfahren bei Temperaturen zwischen 120 und 180 C° in direkt befeuerten Drehöfen oder indirekt befeuerten stehenden oder liegenden Kochern hergestellte Beta-Halbhydrat und dem in nassen Brennverfahren unter Druck in Autoklaven oder drucklos in Säuren oder wäßrigen Salzlösungen bei Temperaturen zwischen etwa 80 und 150 C° hergestellte Alpha-Halbhydrat.

Für die allgemeine Verwendung als Putzgips oder als Gips zur Herstellung von Bauteilen, wie Gipsplatten, findet in weitem Umfange das Beta-Halbhydrat Verwendung, während für festere und qualitativ hochwertigere Produkte das Alpha-Halbhydrat verwendet wird.

Das Beta-Halbhydrat ist aufgrund seiner Struktur eine Modifikation die einen hohen Wasser-Gips-Faktor verlangt um in eine verarbeitbare Konsistenz überführt zu werden, während das Alpha-Halbhydrat mit einem niedrigen Wasser-Gips-Faktor (WGF) bereits verarbeitbar ist und Produkte von größerer Festigkeit und Härte ergibt.

Es ist daher vielfach angestrebt worden, einen Halbhydratgips zu erzeugen, der die Eigenschaften des Alphahalbhydrats wenigstens zum Teil aufweist und so hat man zum Beispiel auch Gemische hergestellt aus Alpha- und Betagips um bestimmte Eigenschaften zu erzielen.

Es gibt ferner sogenannte Kombinationsverfahren bei denen in einem Arbeitsgang Gemische aus Alpha- und Betagips entstehen, indem man den Alpha-Gips in einem Drehofen trocknet der gleichzeitig zum Brennen des Betagipses und zum Mischen beider Gipssorten dient. Die Anlagen und Vorrichtungen zur Erzeugung solcher Modifikationen sind vielerlei Art.

Schließlich wird in zunehmenden Maße Gips verarbeitet, also Dihydrat, welcher aus industriellen Gewinnungsanlagen stammt, bzw. bei der Flußsäureherstellung anfällt oder bei der Phosphorsäureherstellung, aber auch Gips der bei der Entschwefelung von Rauchgas von Großfeuerungsanlagen, wie Kraftwerken oder dergleichen anfällt.

Letzterer wird in zunehmenden Maße in der Gipstechnologie verarbeitet. So ist es beispielsweise üblich, daß der als Filterkuchen anfallende, feuchte und sehr feinteilige "REA-Gips" getrocknet und anschließend gebrannt wird, wobei die Trocknung in direktem Kontakt mit heißen Gasen oder indirekt er folgen kann und das Brennen dann in indirekt beheizte Großkochern.

(Ullmann Enzyklopädie der technischen Chemie, 4. Aufl, Bd. 12, 1976, S.297 ff.)

Aus der DE-A 36 05 393 ist es ferner bekannt ein abbindefähiges Calciumsulfat durch Behandeln von Calciumsulfatdihydrat mit Schwefelsäure bei erhöhter Temperatur zu schaffen. Alle diese Verfahren zur Herstellung von Beta- als auch von Alpha-Halbhydrat als auch von Anhydrit verfolgen den Zweck wirtschaftlich zu arbeiten, Energie zu sparen und ein Halbhydrat zu erzeugen das nur wenig mehr als das stöchimetrisch notwendige Wasser verlangt um verarbeitbar zu sein und abzubinden. Die Wirtschaftlichkeit des Brennverfahrens hat man durch besondere Ofen und Kocherkonstruktionen versucht zu erreichen beispielsweise durch Drehöfen und Großkocher.

Die Verringerung des WGF hat die Aufgabe die durch Trocknen zu beseitigende überschüssige Wassermenge möglichst gering zu halten, was wiederum bedeutet, daß die Kristalltracht des Halbhydrats der des Alpha-Halbhydrats möglichst nahekommen soll. Aufgabe der vorliegenden Erfindung ist es nun ein Verfahren zur Herstellung von abbindefähigen Calciumsulfaten aus feinteiligem Calciumsulfatdihydrat, insbesondere aus Calciumsulfatdihydrat aus der Rauchgasentschwefelung, vorzuschlagen, welches sowohl eine Beschleunigung der Dehydratation bei verhältnismäßig niedrigen Temperaturen als auch eine Kristallform erbringt, die die Verwendung eines niedrigen Wasser-Gips-Faktors gestattet.

Gelöst wird diese Aufgabe dadurch, daß der feinteilige Gips mit einer geringen Menge Oxalsäure vermischt wird und dann bei erhöhter Temperatur dehydratisiert wird.

Die Menge der Oxalsäure, die wasserfrei oder als Dihydrat vorliegen kann, liegt zwischen 0,2 und 5 Gew.% und das Dihydrat, insbesondere das REA-Dihydrat kann feucht aber auch trocken sein.

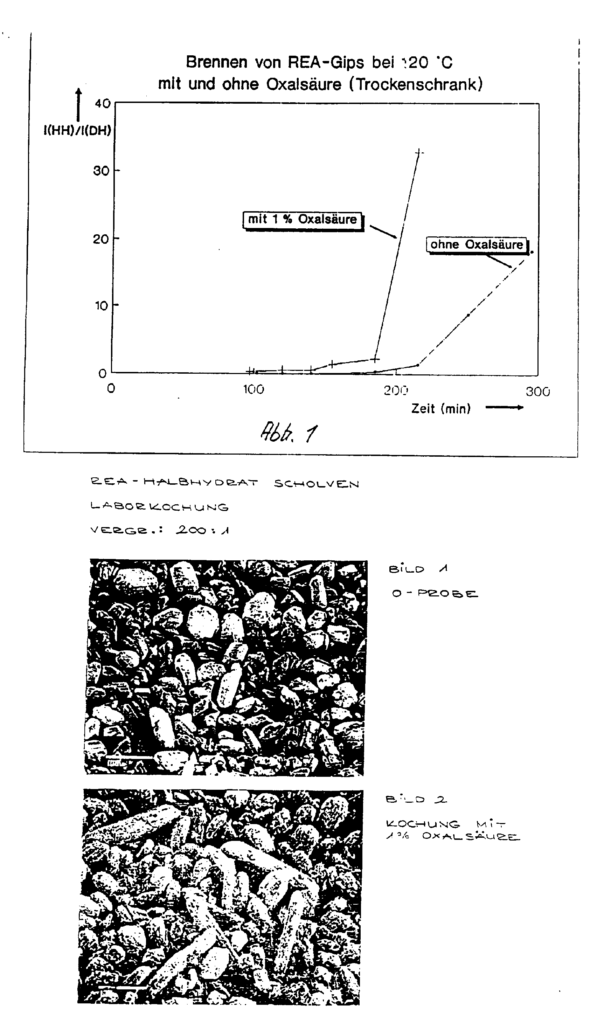

Es hat sich gezeigt, daß REA-Gips sowohl im feuchten als auch im trockenen Zustand vermischt mit einem Prozent bezogen auf das Dihydrat an Oxalsäure durch Erwärmung in einem Wasserbad von 100 C° innerhalb einer Stunde eine abbindefähige Mischung aus Halbhydrat und Dihydrat ergibt. Eine Vergleichsprobe ohne den Oxalsäurezusatz führte unter sonst gleichen Bedingungen zu keiner Halbhydratbildung überhaupt. Eine beschleunigende Wirkung der Oxalsäure auf die Dehydration von REA-Gips wird auch in einem einfachen Trockenschrank-Experiment untersucht, dabei wird eine Kontrollprobe (REA-Gips ohne Oxalsäure und eine Probe REA-Gips mit einem Prozent Oxalsäure) angesetzt bei einer Temperatur von 120 C°. Die Proben werden nicht gerührt. In gewissen Zeitabständen werden kleinere Mengen entnommen und röntgendiffraktrometrisch der Anteile des gebildeten Halbhydrats im Verhältnis zum noch nicht dehydratisierten Halbhydrat abgeschätzt. Das Ergebnis ist in der beigefügten Abbildung 1 wiedergegeben.

Man erkennt, daß die Halbhydratbildung mit Oxalsäure deutlich schneller erfolgt und bei etwa 220 Minuten vollständig ist. Dagegen ist die Dehydratation der Vergleichsprobe ohne Oxalsäure auch nach 300 Minuten noch nicht abgeschlossen. Analog beschleunigende Effekte werden auch bei Trockenschrank-Temperaturen von 100 C° und von 160 C° festgestellt.

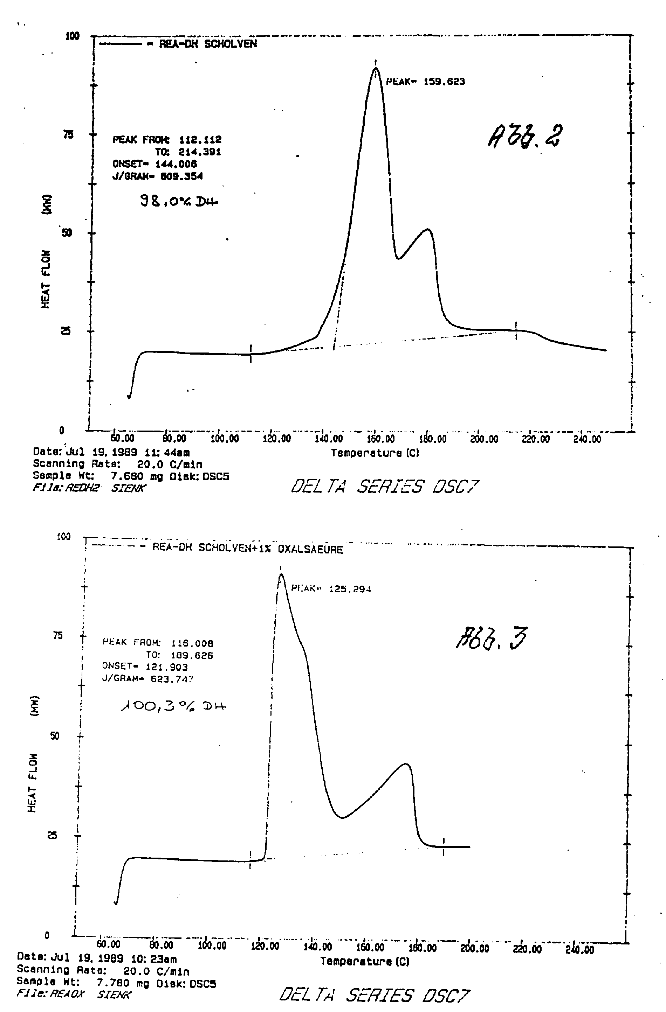

Der Einfluß der Oxalsäure auf die Dehydratation von Calciumsulfat-Dihydrat wird auch mittels DSC (differential scanning calorimetry) untersucht. Die Abbildungen 2 und 3 zeigen Dehydratationskurven von REA-Gips ohne und mit einem Prozent Oxalsäure. Zu den Diagrammen sind die für die Entwässerung verbrauchten Enthalpien als Funktion der Temperatur aufgetragen. Der jeweils linke Peak entspricht dem Übergang von Dihydrat zu Halbhydrat, der rechte dem Übergang von Halbhydrat zu Anhydrit III.

Der Vergleich der Abbildungen 2 und 3 macht deutlich, daß die Entwässerung Dihydrat→ Halbhydrat in Anwesenheit von Oxalsäure schon bei wesentlich niedrigeren Temperaturen erfolgt (Peak-Maxima bei ca. 125 C° mit Oxalsäure und bei 160 C° ohne Oxalsäure). Die Entwässerung von Halbhydrat zu Anhydrit III wird dagegen nur geringfügig beeinflußt. In einer Zusatzmenge von 0,1 % zeigt die Oxalsäure noch keine Wirksamkeit, diese scheint bei einer Zusatzmenge von 0,2 % zu beginnen.

Zusammenfassend läßt sich somit feststellen, daß der Zusatz von Oxalsäure die Reaktion Dihydrat→ Halbhydrat beschleunigt und es ermöglicht, diese Entwässerung bei niedrigeren Temperaturen durchzuführen. Es ergeben sich daraus Möglichkeiten zur Energieeinsparung bzw. zur Nutzung von Wärmemüll auf niedrigem Temperaturniveau zum Gipsbrennen.

Der unter Zusatz von Oxalsäure erbrannte Stuckgips weist darüberhinaus verschiedene günstige technologische Eigenschaften auf. Um diesen Eigenschaften zu untersuchen, wurden in einem Technikumskocher dihydratfreie Stuckgipse aus REA-Gips ohne und mit einem Prozent Oxalsäure erzeugt. Diese Proben sowie eine Probe, in der die überschüssige Oxalsäure mit Kalkhydrat neutralisiert worden war, wurden untersucht. Besonders beachtenswert ist dabei die Verminderung des Wasser-Gips-Faktors (WGF) nach Einstreumenge, auf 0,57 bzw. 0.63 nach Neutralisation des mit Oxalsäure gebrannten Gipses im Vergleich zu 0,82 beim REA-Halbhydrat ohne Oxalsäure.

Das Brennen mit Oxalsäure liefert somit ein Halbhydrat dessen Eigenschaften in Richtung Alpha-Halbhydrat modifiziert sind. Dem entspricht auch eine höhere Stabilität des Korns des "Oxalsäuren-Gipses" bei Wasserkontakt: Während die Kontrollprobe einen Kornzerfall von ca. 44 % zeigte, wies der "Oxalsäuren-Gips" nur einen Zerfall von 8 % auf. Ein geringer Kornzerfall ist aber für Alpha-Halbhydrate typisch.

Der niedrige WGF des "Oxalsäure-Gipses" bedingt günstige Festigkeitswerte, die in der folgenden Tabelle zusammengestellt sind. (Untersuchungen an Prismen) mit den Abmessungen von 4 x 4 x 16 cm (Din 1168).

| | REA-Gips ohne Oxalsäure | REA-Gips + 1% Oxalsäure | REA-Gips + 1% Oxalsäure mit Ca(OH)2 neutralis. |
|---|---|---|---|
| Biegefestigkeit (N/mm2) | 4.7 | 6.8 | 6.2. |
| Druckfestigkeit (N/mm2) | 10.5 | 23.6 | 19.1 |
| Brinellhärte (N/mm2) | 14.6 | 43.1 | 30.2 |

Von diesen verbesserten Festigkeitswerten abgesehen, ist der niedrige WGF auch aus Gründen der Energieersparnis etwa bei der GKP-Produktion wünschenswert, da bei niedrigem WGF weniger überstöchimetrisches Wasser beim Trocknen der Platten zu verdampfen ist.

Der Mechanismus der Beeinflussung des Brennvorgangs durch Oxalsäure ist nicht geklärt. Offenbar wird aber beim Brennprozeß die Kristallgröße und -form beeinflußt, wie aus dem beigefügten rasterelektromikroskopischen Aufnahmen erkennbar wird. (Abb .4) In der Praxis wird das Verfahren derart verwirklicht, daß das zu dehydratisierende Dihydrat mit einer entsprechenden Menge Oxalsäure vermischt in einem geeigneten Brennaggregat behandelt wird. Das Dihydrat kann vor der Einführung in das Brennaggregat mit der Oxalsäure

3

vermischt werden. Die Mischung kann jedoch auch mit dem Eintrag des Dihydrats in das Brennaggregat vorgenommen werden oder in dem Brennaggregat selbst erzeugt werden.

Wie bereits oben dargelegt, kann das Dihydrat feucht sein, was insbesondere für das REA-Dihydrat gilt, oder trocken.

Die in der vorangegangenen Beschreibung erwähnten Abbildungen und graphischen Darstellungen sind anschließend beigefügt.

## Patentansprüche

1. Verfahren zur Herstellung von abbindefähigen Calciumsulfaten aus Calciumsulfat-Dihydrat durch Erwärmung auf erhöhte Temperaturen, **dadurch gekennzeichnet**, daß das Dihydrat mit einer geringen Menge Oxalsäure vermischt und dann gebrannt wird.

2. Verfahren nach Anspruch 1, **dadurch gekennzeichnet**, daß die Menge der Oxalsäure 0,2 bis 5 Gew.% bezogen auf das Dihydrat beträgt.

3. Verfahren nach Anspruch 1 und 2, **dadurch gekennzeichnet**, daß das Dihydrat feucht oder trocken eingesetzt wird und die Oxalsäure kristallwasserfrei bzw. in Dihydrat form.

4. Verfahren nach Anspruch 1, **dadurch gekennzeichnet**, daß die Menge an Oxalsäure vorzugsweise 1% bezogen auf das Dihydrat beträgt und die Dehydratisierung bei Temperaturen zwischen 80 C° und 160 C° durchgeführt wird.

5. Verfahren nach Anspruch 1 bis 4, **dadurch gekennzeichnet**, daß die Oxalsäure in feinteiliger Form vorliegt.

## Claims

1. Process for the preparation of curable calcium sulphates from calcium sulphate dihydrate by heating to raised temperatures, characterized in that the dihydrate is mixed with a small quantity of oxalic acid and then burnt.

2. Process according to Claim 1, characterized in that the quantity of oxalic acid is 0.2 to 5% by wt. referred to the dihydrate.

3. Process according to Claims 1 and 2, characterized in that the dihydrate is used moist or dry and the oxalic acid is used in the form free of water of crystallization or dihydrate form.

4. Process according to Claim 1, characterized in that the quantity of oxalic acid is preferably 1% referred to the dihydrate and the dehydration is carried at temperatures between 80°C and 160°C.

5. Process according to Claims 1 to 4, characterized in that the oxalic acid is present in finely particulate form.

## Revendications

1. Procédé pour la préparation de sulfate de calcium durcissant à partir de sulfate de calcium dihydraté par chauffage à température élevée, caractérisé en ce que l'on mélange le dihydrate à une faible quantité d'acide oxalique et qu'on effectue ensuite la cuisson.

2. Procédé selon la revendication 1, caractérisé en ce que la quantité d'acide oxalique est comprise entre 0,2 et 5% en poids, rapportée au dihydrate.

3. Procédé selon les revendications 1 et 2, caractérisé en ce que le dihydrate est utilisé à l'état humide ou sec et que l'acide oxalique est sous forme cristalline anhydre ou sous forme de dihydrate.

4. Procédé selon la revendication 1, caractérisé en ce que la quantité d'acide oxalique est égale de préférence à 1%, rapporté au dihydrate, et que la déshydratation est effectuée à des températures comprises entre 80°C et 160°C.

5. Procédé selon les revendications 1 à 4, caractérisé en ce que l'acide oxalique se présente sous une forme à grains fins.

Brennen von REA-Gips bei 120 °C
mit und ohne Oxalsäure (Trockenschrank)

Abb. 1

REA - HALBHYDRAT SCHOLVEN

LABORKOCHUNG

VERGR.: 200 : 1

BILD 1
0 - PROBE

BILD 2
KOCHUNG MIT
1% OXALSÄURE

EP 0 414 937 B1

— = REA-DH SCHOLVEN

PEAK= 159.623

PEAK FROM: 112.112
TO: 214.391
ONSET= 144.006
J/GRAM= 609.354

98,0% DH

Abb. 2

Date: Jul 19, 1989 11:44am
Scanning Rate: 20.0 C/min
Sample Wt: 7.680 mg Disk: DSC5
File: REDH2 SIENK

DELTA SERIES DSC7

—— = REA-DH SCHOLVEN+1% OXALSAEURE

PEAK= 125.294

PEAK FROM: 116.008
TO: 189.626
ONSET= 121.903
J/GRAM= 623.747

100,3% DH

Abb. 3

Date: Jul 19, 1989 10:23am
Scanning Rate: 20.0 C/min
Sample Wt: 7.780 mg Disk: DSC5
File: REAOX SIENK

DELTA SERIES DSC7